# EUROPÄISCHE PATENTSCHRIFT

(11) **EP 2 745 749 B1**
(45) Veröffentlichungstag und Bekanntmachung des Hinweises auf die Patenterteilung: **24.08.2016**
(21) Anmeldenummer: 12199045.1
(22) Anmeldetag: 21.12.2012
(51) Int. Cl.: A47J 31/06

(54) **Vorrichtung zum Zubereiten eines Getränks**
Device for preparing a drink
Dispositif de préparation d'une boisson

(43) Veröffentlichungstag der Anmeldung: 25.06.2014
(73) Patentinhaber: Delica AG, 4127 Birsfelden (CH)
(72) Erfinder: Affolter, Roland, 5103 Möriken-Wildegg (CH); Crozier, Etienne, 2520 La Neuveville (CH); Heisel, Guillaume, 2523 Lignières (CH); Thuliez, Jean-Luc, 2525 Le Landeron (CH)
(74) Vertreter: Hepp Wenger Ryffel AG

(56) Entgegenhaltungen:
- WO-A1-2012/156167
- US-A1- 2010 206 177

## Beschreibung

Die Erfindung betrifft eine Vorrichtung zum Zubereiten eines Getränks gemäss dem Oberbegriff von Anspruch 1. Dabei handelt es sich in der Regel um Maschinen für die Zubereitung von Tee oder Kaffee, portionenweise verpackt in Kapseln oder Pads. Insbesondere für die Zubereitung von Kapselkaffee sind seit vielen Jahren zahlreiche Vorrichtungen bekannt und gebräuchlich.

Die Kapseln aus Kunststoff oder Aluminium werden dabei in eine Brühkammer eingeführt, wo sie beim Schliessen der Brühkammer wenigstens auf einer Seite penetriert werden. Ausserdem muss zum Schliessen der Brühkammer ein bestimmter Schliessdruck aufgebracht werden, da die Extraktion teilweise unter hohem Druck erfolgt. Beim Öffnen der Brühkammer fällt die gebrauchte Portionsverpackung nach unten in einen Auffangbehälter. Für die Schliessbewegung an der Brühkammer und für das Aufbringen der dazu erforderlicher Kraft werden Betätigungselemente in der Form von einarmigen Schwenkhebeln eingesetzt. Derartige Hebelmechanismen sind beispielsweise bekannt aus EP 1646305, WO 2008/004116, WO 2009/074553, WO 2012/032019. Weiter Stand der Technik Dokument und : US 2010/206177, WO 2012/156167.

Die bekannten Hebelmechanismen sind so ausgelegt, dass sie einen Schwenkwinkel von ca. 90 Grad zurücklegen, wobei sie in der Offenstellung etwa vertikal und in der Schliessstellung etwa horizontal positioniert sind. Dies hat allerdings den Nachteil, dass über der Maschine ein bestimmter Luftraum frei bleiben muss, um eine ungehinderte Betätigung des Hebels zu gewährleisten. Damit unterliegt die Aufstellung der Maschine beispielsweise in einer Küche bestimmten Einschränkungen. Der nach oben aufragende Hebel in der Offenstellung stellt ausserdem ein Gefahrenpotenzial dar, weil die Maschine durch unbeabsichtigte Berührung umgekippt werden kann.

Es ist daher eine Aufgabe der Erfindung, eine Vorrichtung der eingangs genannten Art zu schaffen, bei welcher die Schliessmechanik an den Kammerteilen insgesamt auch unter ergonomischen Gesichtspunkten verbessert wird und welche insbesondere ohne Einsatz eines Schwenkehebels betätigt werden kann. Diese Aufgabe wird erfindungsgemäss mit einer Vorrichtung gelöst, welche die Merkmale im Anspruch 1 aufweist.

Durch die Verschiebbarkeit des Betätigungselements entlang einer vorzugsweise linearen oder kurvenförmigen Führungsbahn ist es ersichtlicherweise möglich, eine ausladende Schwenkbewegung zu vermeiden, indem die Führungsbahn in einem Bereich angeordnet wird, der in unmittelbarer Nachbarschaft der Vorrichtung oder an der Vorrichtung selbst liegt. Die Führungsbahn könnte dabei ohne weiteres auch eine Kurve bilden. Ausserdem spielt es keine Rolle, ob die Führungsbahn eher vertikal oder eher horizontal ausgerichtet ist. Dies hängt letztlich auch von der Art des Getriebes ab, mit dessen Hilfe die Bewegung des Betätigungselements auf das wenigstens ein Kammerteil übertragen wird.

Eine besonderes vorteilhafte Kraftübertragung kann dadurch erfolgen, dass das Betätigungselement direkt oder indirekt mit einem Kniehebelgetriebe in Wirkverbindung steht. Kniehebelgetriebe haben sich bereits bei den bekannten Vorrichtungen besonders bewährt, weil damit auf einfache Art und Weise ein Totpunkt überfahren werden kann, an dem das Getriebe selbsthemmend ist und in Folge des Innendrucks in der Brühkammer nicht reversiert. Das Betätigungselement kann dabei an einem schwenkbar gelagerten Hebelarm angelenkt sein, welcher ein Glied im Getriebe bildet.

Weitere Vorteile können erreicht werden, wenn die Vorrichtung eine Einführöffnung zum Einführen der Portionsverpackung zwischen die Kammerteile in der Offenstellung aufweist und wenn das Betätigungselement diese Einführöffnung in der Schliessstellung der Kammerteile verschliesst oder abdeckt. Das Betätigungselement kann so ausgebildet sein, dass es die Einführöffnung in der Offenstellung der Kammerteile freilegt.

Dies kann auf besonders einfache Weise dadurch erreicht werden, dass die Kammerteile von einem Gehäuse umgeben sind und dass das Betätigungselement durch einen Abschnitt des Gehäuses gebildet wird. Dadurch ist das Betätigungselement unmittelbar in die Vorrichtung integriert und erfüllt eine Doppelfunktion, indem es die Innenseite der Vorrichtung schützt. Ausserdem kann ein derartiges Betätigungselement derart ausgestaltet werden, dass es weder in der Offenstellung noch in der Schliessstellung die Bedienungsperson behindern kann.

Das Kammerteil kann aber auch von einem Gehäuse umgeben sein, wobei das Betätigungselement ein separates Bauteil ist, das entlang eines Gehäusewandabschnitts verschiebbar ist. Dabei kann das Betätigungselement beispielsweise als Griffstück ausgebildet sein, das aus dem Gehäuse ragt.

Besonders vorteilhaft sind die Kammerteile auf einer linearen Bewegungsbahn relativ zu einander beweglich, wobei das Betätigungselement parallel zur Bewegungsrichtung der Kammerteile verschiebbar ist. Diese Parallelität zwischen der Bewegung des Betätigungselements und der Bewegung der Kammerteile erlaubt ebenfalls eine niedrige Bauhöhe der Vorrichtung.

Das Betätigungselement kann als Schlitten ausgebildet sein der durch vorzugsweise zwei zueinander parallelen Führungsbahnen geführt ist. Damit wird eine ausreichende Seitenstabilität erreicht.

Das Betätigungselement kann zudem Verrieglungsmittel aufweisen, zum Verriegeln beim Erreichen der Schliessstellung der Kammerteile. Diese Verriegelungsmittel stellen sicher, dass eine korrekte Schliessstellung erstellt ist und dass eine unbeabsichtigte Öffnung der Brühkammer auch unter Innendruck nicht möglich ist. Die Verriegelungsmittel können dabei mit wenigstens einer Drucktaste am Betätigungselement lösbar sein.

Für die Ausgestaltung des Getriebes sind grundsätzlich verschiedene Bewegungsmechanismen denkbar. Dabei können neben Zahngetriebenen und Hebelgetrieben auch Zugmittelgetriebe oder Kombinationen von verschiedenen Getriebearten zum Einsatz kommen. Übersetzungen oder Untersetzungen sind dabei möglich. Die Bewegung zwischen Betätigungselement und dem beweglichen Kammerteil kann gleichsinnig oder gegensinnig verlaufen. Schliesslich ist es auch denkbar, zum Erreichen der Offenstellung oder der Schliessstellung zusätzliche Kraftspeicher wie z.B. mechanische oder pneumatische Federn einzusetzen.

Weitere Vorteile und Einzelmerkmale der Erfindung ergeben sich aus der nachfolgenden Beschreibung von Ausführungsbeispielen und aus den Zeichnungen. Es zeigen:
- Figur 1: Eine perspektivische Darstellung einer erfindungsgemässen Vorrichtung mit dem Betätigungselement in der Offenstellung;
- Figur 2: Die Vorrichtung gemäss Figur 1 in einer alternativen Perspektive mit dem Betätigungselement in der Schliessstellung;
- Figur 3: Eine perspektivische Ansicht des Brühmoduls an der Maschine gemäss Figur 1 in der Offenstellung;
- Figur 4: Das Brühmodul gemäss Figur 3 in einer Zwischenstellung;
- Figur 5: Das Brühmodul gemäss Figur 3 in der Schiessstellung;
- Figur 6: Ein Querschnitt durch das Getriebe am Brühmodul gemäss Figur 3 in der Schliessstellung;
- Figur 7: Das Getriebe gemäss Figur 6 in einer Zwischenstellung;
- Figur 8: Das Getriebe gemäss Figur 6 in der Offenstellung;
- Figur 9: Eine symbolische Darstellung einer alternativen Getriebeversion mit Verzahnung;
- Figur 10: Eine symbolische Darstellung einer weiteren Getriebeversion mit Seilzug;
- Figur 11: Eine schematische Darstellung eines Verriegelungsmittels am Betätigungselement;
- Figur 12: Eine symbolische Darstellung einer weiteren Getriebeversion mit Zahnrad und Pleuel; und
- Figur 13: Eine symbolische Darstellung einer weiteren Getriebeversion mit Zwischenzahnrad und Pleuel.

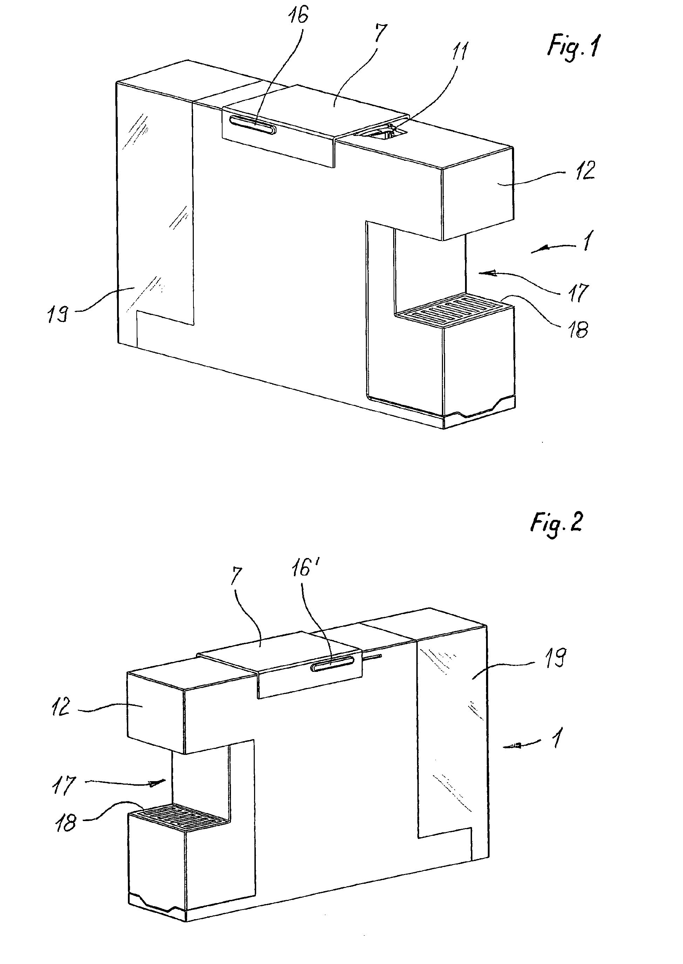

Die Figuren 1 und 2 zeigen eine insgesamt mit 1 bezeichnete Kaffeemaschine, die eine kubische Gesamtkonfiguration aufweist. Das Gehäuse 12 ist vorne mit einer Ausgabenische 17 versehen. Dort kann auf einer Standfläche 18 eine Tasse zum Bezug von Kaffee abgestellt werden. Auf der Rückseite ist ein Wassertank 19 angeordnet. Die Oberseite der Kaffeemaschine ist als ebene Fläche ausgebildet. Ein linear verschiebbares Betätigungselement 7 ist dabei als flacher etwa U-förmiger Schieber ausgebildet. Auf beiden Seiten des Betätigungselements ist je eine Drucktaste 16,16' angeordnet. Gemäss Figur 1 ist das Betätigungselement 7 nach hinten geschoben, so dass eine Einführöffnung 11 für die hier nicht dargestellte Kaffeekapsel freigelegt wird. Gemäss Figur 2 ist das Betätigungselement 7 in der Schliessstellung verriegelt. Selbstverständlich verfügt die Kaffeemaschine noch über weitere, hier nicht dargestellte Elemente auf der Aussenseite, wie z.B. Schalter, Leuchtdioden, einen Netzanschluss usw. Im Übrigen sind dem Fachmann die Grundfunktionen einer Kapsel-Kaffeemaschine bekannt, weshalb sie hier nicht näher beschrieben werden.

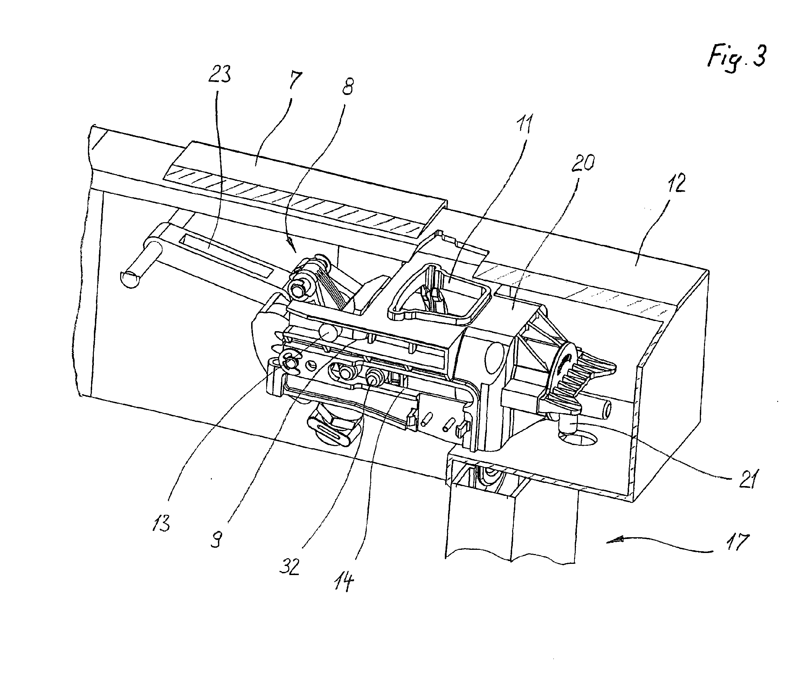

Aus Figur 3 sind weitere Details der Kaffeemaschine gemäss Figur 1 ersichtlich, die sonst vom Gehäuse 12 verdeckt sind. Die relativ zu einander beweglichen Kammerteile und das Getriebe für deren Betätigung sind in einem Modulblock 20 angeordnet, der normalerweise aus Kunststoff gefertigt ist. Auf der Oberseite dieses Modulblocks ist die Einführöffnung 11 sichtbar, deren Querschnitt etwa dem Querschnitt der einzuführenden Kapsel entspricht. Das teilweise aufgeschnittene Betätigungselement 7 ist als Schlitten oder Schieber ausgebildet, von dem hier nur gerade seitliche Führungszapfen 13 sichtbar sind. Diese gleiten in einer linearen Führungsbahn 9, die auf beiden Seiten des Modulblocks 20 angeordnet ist.

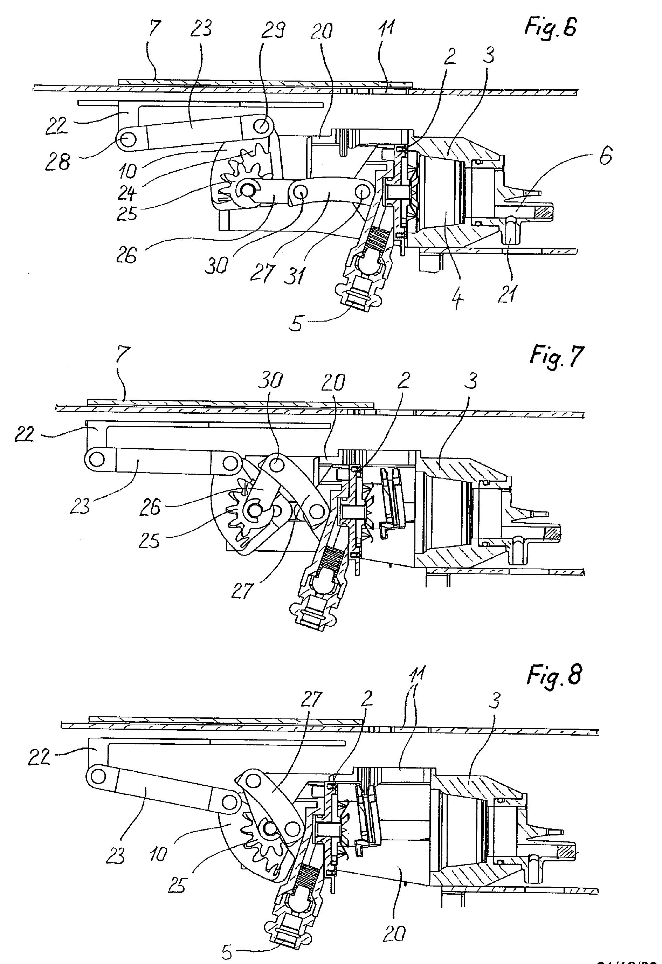

Auf der Innenseite des Betätigungselements 7 ist eine hier nicht sichtbare Anlenkgabel 22 (siehe Figuren 6 bis 8) befestigt, an welcher eine Koppel 23 angelenkt ist. Diese ist Bestandteil eines mit insgesamt 8 bezeichneten Getriebes, das nachstehend noch anhand der Figur 6 näher erläutert wird.

Ebenfalls sichtbar ist hier die Führungsbahn 14 für das mit dem Getriebe 8 betätigte bewegliche Kammerteil. Um eine möglichst reibungslose Geradeführung zu gewährleisten, können Führungszapfen 32 eingesetzt werden.

Auf der Frontseite ist der Modulblock 20 mit einem Ausguss 21 verbunden, aus dem Kaffee gegen die darunter liegende Ausgabenische 17 fliessen kann.

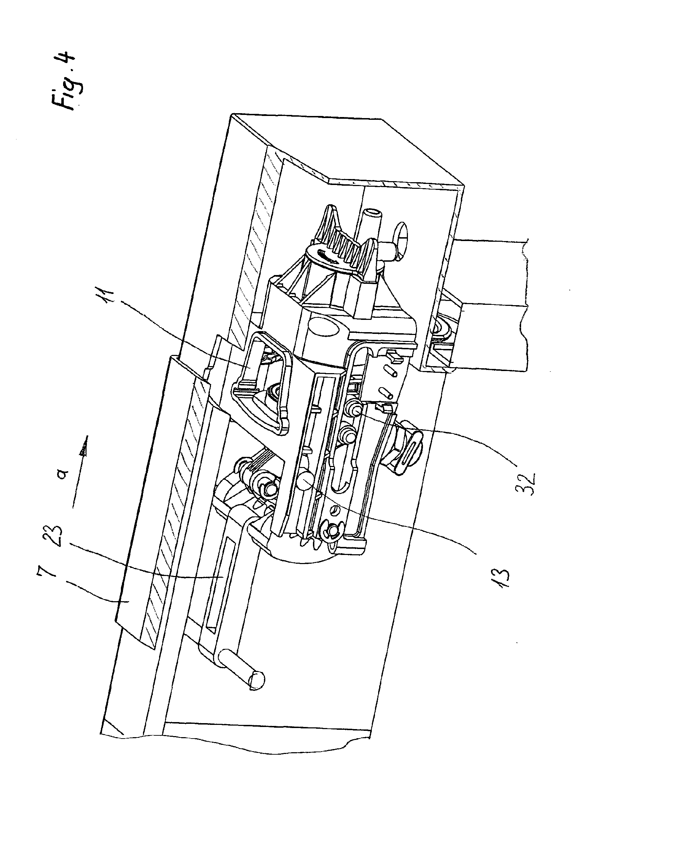

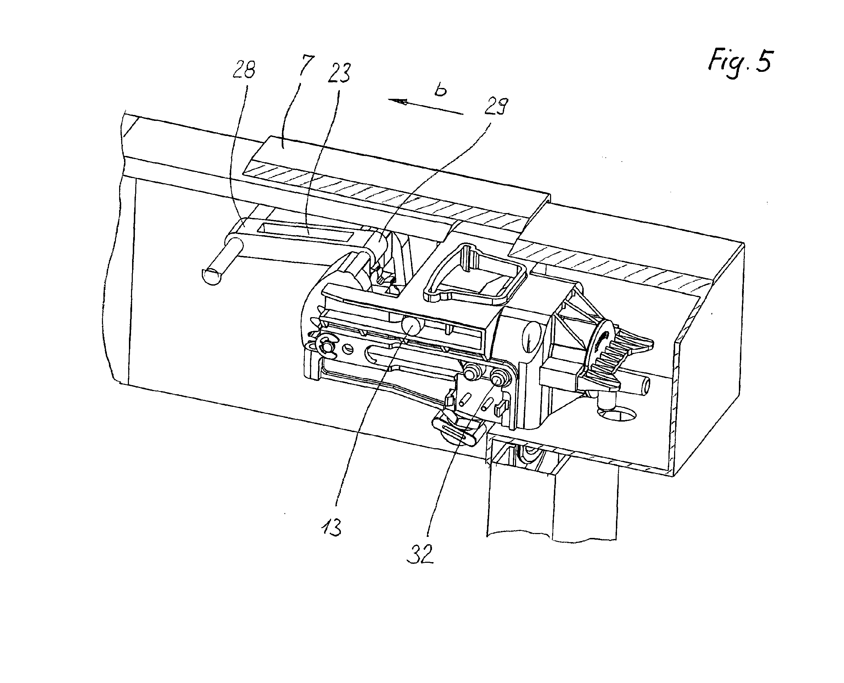

In der Betriebsstellung gemäss Figur 3 ist die Vorrichtung bereit für den Einwurf einer Kapsel in die Einführöffnung 11. Anschliessend wird das Betätigungselement 7 in Pfeilrichtung a verschoben (Figur 4), wobei der Schliessvorgang an der Brühkammer beginnt und die Kapsel in Richtung Brühposition verschoben wird. Gemäss Figur 5 ist die endgültige Schliessstellung erreicht und der Extraktionsprozess kann beginnen.

Weitere Einzelheiten der Kinematik sind aus den Figuren 6 bis 8 ersichtlich. Beim vorliegenden Ausführungsbeispiel besteht die Brühkammer 4 aus einem beweglichen Kammerteil 2 und aus einem festen Kammerteil 3, wobei letzteres der Aussenkonfiguration der Kapsel entspricht und das bewegliche Kammerteil 2 praktisch als beweglicher Deckel ausgebildet ist. Zur Brühkammer 4 führt eine Zuleitung 5, über welche eine Pumpe unter Druck heisses Wasser zuführt. Der Kaffee wird über eine Ableitung 6 aus der Brühkammer 4 abgeleitet und dem Ausguss 21 zugeführt. An den Kammerteilen 2 und 3 sind auf an sich bekannte Weise Penetrationselemente angeordnet, welche die Kapsel zur Durchleitung des Wassers penetrieren.

Selbstverständlich könnte auch nur das bewegliche Kammerteil 2 mit Penetrationselementen bestückt sein oder es wäre gar denkbar, dass die Kammerteile überhaupt keine Penetrationselemente aufweisen, wenn die Kapsel bereits mit Öffnungen und/oder Filtern zur Durchleitung des Brühwassers versehen ist.

Das Getriebe 8 verfügt über die bereits erwähnte Koppel 23, die an einem ersten Gelenk 28 an der Anlenkgabel 22 angelenkt ist. Ein im Modulblock 20 schwenkbar gelagerter Hebelarm 10 ist mit einem zweiten Gelenk 29 mit der Koppel 23 verbunden. Der Hebelarm 10 verfügt über eine Innenverzahnung 24, die mit einem Zahnsegment 25 kämmt. Das Zahnsegment ist fest mit einem Kniehebel 26 verbunden und letzterer ist über ein drittes Gelenk 30 mit einer zweiten Koppel 27 gelenkig verbunden. Die zweite Koppel ist über ein viertes Gelenk 31 an das bewegliche Kammerteil 2 angelenkt.

Die Figuren 6 bis 8 zeigen den Bewegungsablauf im Vergleich zu den Figuren 3 bis 5 in umgekehrter Reihenfolge. In der Schliessstellung gemäss Figur 6 ist die Kapsel in der Brühkammer 4 eingeschlossen, wobei das Getriebe 8 so ausgelegt ist, dass es in der Schliessstellung selbsthemmend ist. Zusätzlich kann das Betätigungselement 7 in der Schliessstellung verriegelt sein. Zum Öffnen der Brühkammer und zum Entfernen der Kapsel muss das Betätigungselement 7 in Pfeilrichtung b (Figur 5) verschoben werden.

Wie aus Figur 7 ersichtlich ist, wird dabei der Hebelarm 10 zurückgeschwenkt, womit auch das Zahnsegment 25 sich in der Innenverzahnung 24 abrollt und dabei verdreht. Über dieses Drehmoment wird am dritten Gelenk 30 auch die zweite Koppel 27 angehoben und gleichzeitig zurückgezogen, so dass sich das bewegliche Kammerteil 2 vom festen Kammerteil 4 entfernt.

Gemäss Figur 8 ist wiederum die Offenstellung erreicht, in welcher die gebrauchte Kapsel nach unten fallen kann. Jetzt kann über die Einführöffnung 11 eine neue Kapsel eingeschoben werden, die am beweglichen Kammerteil 2 wieder in die geschlossene Brühkammer verschoben wird. Mit dem dargestellten Getriebe ist auf einfache Weise auch eine progressive Kraftverstärkung erreichbar, so dass bei gleich bleibender Kraft am Betätigungselement 7 die resultierende Schliesskraft am beweglichen Kammerteil 2 kontinuierlich zunimmt.

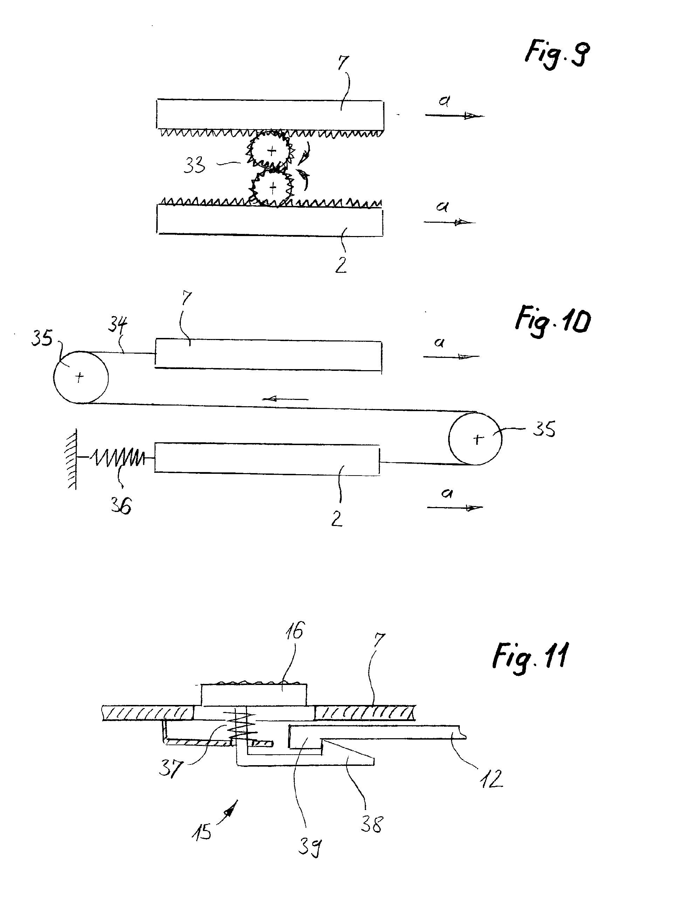

Wie bereits erwähnt, kann das erfindungsgemässe Prinzip mit verschiedenen Getriebearten realisiert werden. Die Figuren 9 und 10 zeigen jeweils symbolisch ein Betätigungselement 7 und ein bewegliches Kammerteil 2. Beide beweglichen Elemente verfügen über einen Zahnstangenabschnitt, der mit je einem Zahnrad eines Zahnradpaars 33 kämmt. Ersichtlicherweise führt eine Bewegung des Betätigungselements 7 in Pfeilrichtung a zu einer Bewegung in der gleichen Richtung am beweglichen Kammerteil 2.

Gemäss Figur 10 ist das Betätigungselement 7 über einen Seilzug 34 mit dem beweglichen Kammerteil 2 verbunden. Der Seilzug ist über Umlenkrollen 35 derart geführt, dass eine Bewegung des Betätigungselements 7 in Pfeilrichtung a zu einer eben solchen Bewegung des beweglichen Kammerteils 2 führt. Letzteres steht unter der Vorspannung einer Zugfeder 36, sodass das bewegliche Kammerteil 2 wieder in die Ausgangsposition zurückführbar ist.

Selbstverständlich ist die erfindungsgemässe Vorrichtung nicht auf eine Brühkammer beschränkt, die ein festes und ein bewegliches Kammerteil aufweist. Das Getriebe könnte auch derart ausgebildet sein, dass sich beide Kammerteile im Modulblock auf einander zu bzw. von einander weg bewegen. Die Bewegung der Kammerteile muss auch nicht zwingend linear verlaufen. Es ist ohne Weiteres denkbar, dass wenigstens eines der Kammerteile eine Schwenkbewegung oder eine kombinierte Schwenk-/ Schiebebewegung ausführt.

Figur 11 zeigt noch rein schematisch ein Verriegelungsmittel 15, das mit den in Figur 1 gezeigten Drucktasten 16 betätigt werden kann. Die Drucktaste 16 ist mit Hilfe einer Druckfeder 37 nach aussen vorgespannt. Beim Erreichen der Schliessstellung des Betätigungselements 7 rastet eine Sperrklinke 38 unter einer Sperrleiste 39 am Gehäuse 12. Die Verriegelung wird gelöst, indem die Drucktaste 16 nach innen gedrückt wird, sodass die Sperrklinke 38 wieder befreit wird.

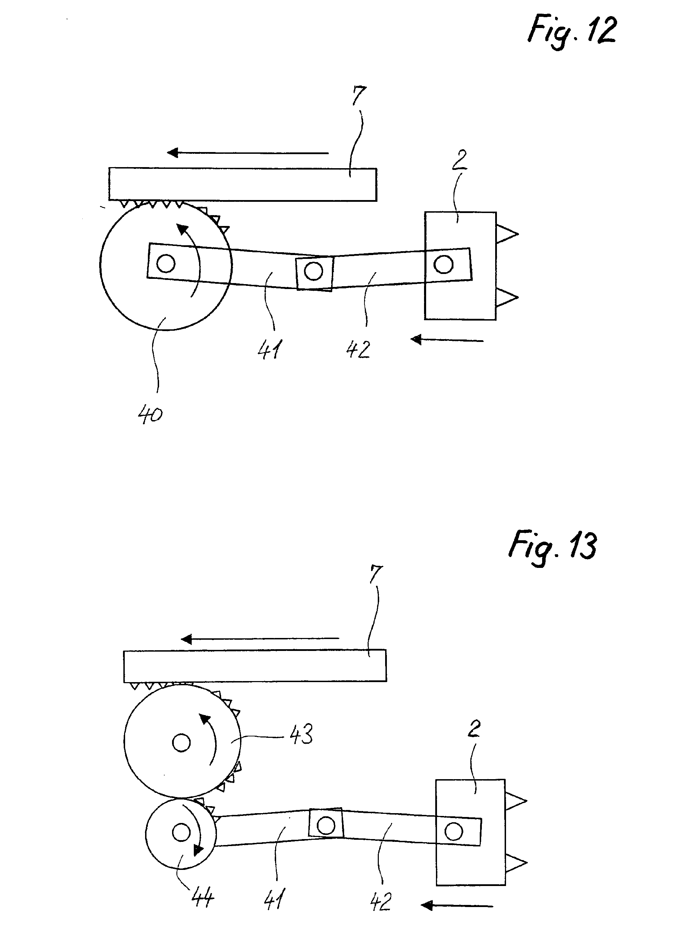

Figur 12 zeigt eine weitere alternative Getriebeversion, bei welcher das Betätigungselement 7 ähnlich wie beim Ausführungsbeispiel gemäss Figur 9 auf der Unterseite als Zahnstange ausgebildet ist. Diese kämmt mit einem Zahnrad 40, an welchem eine Kurbel 41 befestigt ist. Diese wiederum ist mit einer Koppel 42 gelenkig verbunden, der das bewegliche Kammerteil 2 linear verschiebt.

Figur 13 zeigt eine weitere alternative Getriebeversion, bei welcher wie beim Ausführungsbeispiel gemäss Figur 12 eine Kurbel 41 und eine Koppel 42 vorgesehen ist. Das Zahnrad 44 an der Kurbel 41 kämmt allerdings nicht direkt mit der Verzahnung am Betätigungselement. Dazwischen ist vielmehr ein Zwischenzahnrad 43 geschaltet, womit ersichtlicherweise die Drehrichtung am Zahnrad 44 der Kurbel geändert wird. Selbstverständlich müsste es sich bei sämtlichen Ausführungsformen nicht um vollständige Zahnräder handeln. In bestimmten Fällen genügen auch lediglich Zahnradsegmente, wobei diese auch eine Innenverzahnung und/oder eine Aussenverzahnung aufweisen könnten.

## Patentansprüche

1. Vorrichtung (1) zum Zubereiten eines Getränks aus einem in einer Portionsverpackung, insbesondere in einer Kapsel, enthaltenen Verpackungsgut, mit zwei zwischen einer Offenstellung und einer Schliessstellung relativ zueinander beweglichen Kammerteilen (2, 3), welche in der Schliessstellung eine Kammer (4) zur Aufnahme der Portionsverpackung bilden, mit Mitteln (5, 6) zum Durchleiten eines flüssigen Mediums durch die Kammer, sowie mit einem Betätigungselement (7), das zum Erstellen der Offenstellung und der Schliessstellung über ein Getriebe (8) mit wenigstens einem der Kammerteile in Wirkverbindung steht, **dadurch gekennzeichnet, dass** das Betätigungselement (7) entlang einer vorzugsweise linearen oder kurvenförmigen Führungsbahn (9) verschiebbar ist.

2. Vorrichtung nach Anspruch 1, **dadurch gekennzeichnet, dass** das Betätigungselement (7) direkt oder indirekt mit einem Kniehebelgetriebe in Wirkverbindung steht.

3. Vorrichtung nach Anspruch 1 oder 2, **dadurch gekennzeichnet, dass** das Betätigungselement (7) an einem schwenkbar gelagerten Hebelarm (10) angelenkt ist, welcher ein Glied im Getriebe bildet.

4. Vorrichtung nach einem der Ansprüche 1 bis 3, **dadurch gekennzeichnet, dass** eine Einführöffnung (11) zum Einführen der Portionsverpackung zwischen die Kammerteile in der Offenstellung angeordnet ist und dass das Betätigungselement (7) die Einführöffnung in der Schliessstellung der Kammerteile verschliesst oder abdeckt.

5. Vorrichtung nach einem der Ansprüche 1 bis 4, **dadurch gekennzeichnet, dass** die Kammerteile (2, 3) von einem Gehäuse (12) umgeben sind und dass das Betätigungselement (7) durch einen Abschnitt des Gehäuses gebildet wird.

6. Vorrichtung nach einem der Ansprüche 1 bis 4, **dadurch gekennzeichnet, dass** die Kammerteile (2, 3) von einem Gehäuse (12) umgeben sind, und dass das Betätigungselement (7) ein separates Bauteil ist, das entlang eines Gehäusewandabschnitts verschiebbar ist.

7. Vorrichtung nach Anspruch 6, **dadurch gekennzeichnet, dass** das Betätigungselement als aus dem Gehäuse ragendes Griffstück ausgebildet ist.

8. Vorrichtung nach einem der Ansprüche 1 bis 7, **dadurch gekennzeichnet, dass** die Kammerteile auf einer linearen Bewegungsbahn (14) relativ zu einander beweglich sind und dass das Betätigungselement (7) parallel zur Bewegungsrichtung der Kammerteile verschiebbar ist.

9. Vorrichtung nach einem der Ansprüche 1 bis 8, **dadurch gekennzeichnet, dass** das Betätigungselement (7) als Schlitten (13) ausgebildet ist, der an vorzugsweise, zwei zueinander parallelen Führungsbahnen (9) geführt ist.

10. Vorrichtung nach einem der Ansprüche 1 bis 9, **dadurch gekennzeichnet, dass** das Betätigungselement (7) Verriegelungsmittel (15) aufweist zum Verriegeln beim Erreichen der Schliessstellung der Kammerteile.

11. Vorrichtung nach Anspruch 10, **dadurch gekennzeichnet, dass** die Verriegelungsmittel mit wenigstens einer Drucktaste (16) am Betätigungselement (7) lösbar sind.

12. Vorrichtung nach einem der Ansprüche 1 bis 11, **dadurch gekennzeichnet, dass** das Betätigungselemente direkt oder indirekt mit einem Zahnradgetriebe in Wirkverbindung steht.

13. Vorrichtung nach einem der Ansprüche 1 bis 11, **dadurch gekennzeichnet, dass** das Betätigungselement direkt oder indirekt mit einem Zugmittelgetriebe in Wirkverbindung steht.

## Claims

1. Apparatus (1) for preparing a beverage from a substance contained in a single-serve pack, in particular in a capsule, having two chamber parts (2, 3), which can be moved relative to one another between an open position and a closed position and, in the closed position, form a chamber (4) for accommodating the single-serve pack, having means (5, 6) for directing a liquid medium through the chamber, and having an actuating element (7) which, in order to establish the open position and the closed position, is operatively connected to at least one of the chamber parts via a gear mechanism (8), **characterized in that** the actuating element (7) can be displaced along a preferably linear or curved guide path (9).

2. Apparatus according to Claim 1, **characterized in that** the actuating element (7) is operatively connected directly or indirectly to a knee lever gear mechanism.

3. Apparatus according to Claim 1 or 2, **characterized in that** the actuating element (7) is articulated on a pivotably mounted lever arm (10), which forms one member in the gear mechanism.

4. Apparatus according to one of Claims 1 to 3, **characterized in that** an introduction opening (11) for the introduction of the single-serve pack between the chamber parts is arranged in the open position, and **in that** the actuating element (7) closes or covers the introduction opening in the closed position of the chamber parts.

5. Apparatus according to one of Claims 1 to 4, **characterized in that** the chamber parts (2, 3) are enclosed by a housing (12), and **in that** the actuating element (7) is formed by a portion of the housing.

6. Apparatus according to one of Claims 1 to 4, **characterized in that** the chamber parts (2, 3) are enclosed by a housing (12), and **in that** the actuating element (7) is a separate component, which can be displaced along a housing-wall portion.

7. Apparatus according to Claim 6, **characterized in that** the actuating element is designed in the form of a handle which projects out of the housing.

8. Apparatus according to one of Claims 1 to 7, **characterized in that** the chamber parts can be moved relative to one another on a linear movement path (14), and **in that** the actuating element (7) can be displaced parallel to the movement direction of the chamber parts.

9. Apparatus according to one of Claims 1 to 8, **characterized in that** the actuating element (7) is designed in the form of a slide (13), which is guided on preferably two mutually parallel guide paths (9).

10. Apparatus according to one of Claims 1 to 9, **characterized in that** the actuating element (7) has locking means (15) for locking purposes when the closed position of the chamber parts is reached.

11. Apparatus according to Claim 10, **characterized in that** the locking means can be released by at least one pushbutton (16) on the actuating element (7).

12. Apparatus according to one of Claims 1 to 11, **characterized in that** the actuating element is operatively connected directly or indirectly to a toothed gear mechanism.

13. Apparatus according to one of Claims 1 to 11, **characterized in that** the actuating element is operatively connected directly or indirectly to a drawing-means mechanism.

## Revendications

1. Dispositif (1) pour préparer une boisson à partir d'un produit emballé contenu dans un emballage en portion, en particulier dans une capsule, comprenant deux parties de chambre (2, 3) déplaçables l'une par rapport à l'autre entre une position d'ouverture et une position de fermeture, qui forment, dans la position de fermeture, une chambre (4) pour recevoir l'emballage en portion, comprenant des moyens (5, 6) pour conduire un milieu fluide à travers la chambre, et comprenant un élément d'actionnement (7) qui est en liaison fonctionnelle avec au moins l'une des parties de chambre pour réaliser la position d'ouverture et la position de fermeture par le biais d'une transmission (8), **caractérisé en ce que** l'élément d'actionnement (7) peut être déplacé le long d'une voie de guidage (9) de préférence linéaire ou courbe.

2. Dispositif selon la revendication 1, **caractérisé en ce que** l'élément d'actionnement (7) est en liaison fonctionnelle directe ou indirecte avec un mécanisme à genouillère.

3. Dispositif selon la revendication 1 ou 2, **caractérisé en ce que** l'élément d'actionnement (7) est articulé à un bras de levier (10) supporté de manière pivotante, qui forme un organe dans la transmission.

4. Dispositif selon l'une quelconque des revendications 1 à 3, **caractérisé en ce qu'**une ouverture d'insertion (11) pour l'insertion de l'emballage en portion entre les parties de chambre est disposée dans la position d'ouverture et **en ce que** l'élément d'actionnement (7) ferme ou recouvre l'ouverture d'insertion dans la position de fermeture des parties de chambre.

5. Dispositif selon l'une quelconque des revendications 1 à 4, **caractérisé en ce que** les parties de chambre (2, 3) sont entourées par un boîtier (12) et **en ce que** l'élément d'actionnement (7) est formé par une portion du boîtier.

6. Dispositif selon l'une quelconque des revendications 1 à 4, **caractérisé en ce que** les parties de chambre (2, 3) sont entourées par un boîtier (12) et **en ce que** l'élément d'actionnement (7) est un composant séparé qui peut être déplacé le long d'une portion de paroi du boîtier.

7. Dispositif selon la revendication 6, **caractérisé en ce que** l'élément d'actionnement est réalisé sous forme de pièce de préhension faisant saillie hors du boîtier.

8. Dispositif selon l'une quelconque des revendications 1 à 7, **caractérisé en ce que** les parties de chambre sont déplaçables l'une par rapport à l'autre sur une voie de déplacement linéaire (14) et **en ce que** l'élément d'actionnement (7) peut être déplacé parallèlement à la direction de déplacement des parties de chambre.

9. Dispositif selon l'une quelconque des revendications 1 à 8, **caractérisé en ce que** l'élément d'actionnement (7) est réalisé sous forme de chariot (13) qui est guidé de préférence au niveau de deux voies de guidage parallèles l'une à l'autre (9).

10. Dispositif selon l'une quelconque des revendications 1 à 9, **caractérisé en ce que** l'élément d'actionnement (7) présente des moyens de verrouillage (15) pour le verrouillage lors de l'obtention de la position de fermeture des parties de chambre.

11. Dispositif selon la revendication 10, **caractérisé en ce que** les moyens de verrouillage peuvent être desserrés avec au moins un bouton-poussoir (16) sur l'élément d'actionnement (7).

12. Dispositif selon l'une quelconque des revendications 1 à 11, **caractérisé en ce que** l'élément d'actionnement est en liaison fonctionnelle directe ou indirecte avec une transmission par engrenage.

13. Dispositif selon l'une quelconque des revendications 1 à 11, **caractérisé en ce que** l'élément d'actionnement est en liaison fonctionnelle directe ou indirecte avec un mécanisme à moyen de traction.
